(19) Europäisches Patentamt
European Patent Office
Office européen des brevets

(11) Veröffentlichungsnummer: **0 246 582**
**A2**

(12) # EUROPÄISCHE PATENTANMELDUNG

(21) Anmeldenummer: **87107118.9**

(22) Anmeldetag: **16.05.87**

(51) Int. Cl.4: **C08G 65/32**, C08G 8/36, C08G 81/00, C10G 33/04

(30) Priorität: **22.05.86 DE 3617178**

(43) Veröffentlichungstag der Anmeldung: **25.11.87 Patentblatt 87/48**

(84) Benannte Vertragsstaaten: **AT BE DE FR GB IT NL**

(71) Anmelder: **BASF Aktiengesellschaft**
**Carl-Bosch-Strasse 38**
**D-6700 Ludwigshafen(DE)**

(72) Erfinder: **Barthold, Klaus, Dr.**
**Paulusbergstrasse 4**
**D-6800 Mannheim 51(DE)**
Erfinder: **Oppenlaender, Knut, Dr.**
**Otto-Dill-Strasse 23**
**D-6700 Ludwigshafen(DE)**
Erfinder: **Lasowski, Juergen, Dr.**
**Karl-Raeder-Strasse 3**
**D-6703 Limburgerhof(DE)**
Erfinder: **Baur, Richard, Dr.**
**Nelkenstrasse 1**
**D-6704 Mutterstadt(DE)**

(54) **Polyether, erhältlich durch Umsetzung von alkylolierten Bis-(4-hydroxyphenyl)-methanen mit Polyalkylenoxiden und deren Verwendung als Erdölemulsionsspalter.**

(57) Als Erdölemulsionsspalter geeignete Polyether, erhältlich durch Umsetzung von

A) Polyalkylenoxiden aus Ethylenoxid und Propylenoxid mit insgesamt 5 bis 200 Alkylenoxid-Einheiten mit

B) Alkylolierungsprodukten mit niedermolekularen Aldehyden von Bis-(4-hydroxyphenyl)-methanen der allgemeinen Formel II

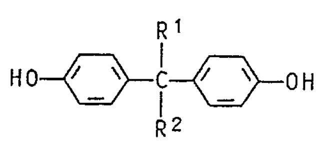

in der $R^1$ und $R^2$ gleich oder verschieden sein können und Wasserstoff, niedermolekulares Alkyl, Phenyl, Carboxy oder niedermolekulares Alkoxycarbonyl bedeuten, wobei das molare Umsetzungsverhältnis der Verbindungen der Formel II zu den alkylolierenden Aldehyden 1:1 bis 1:4 beträgt, bei Temperaturen von 100 bis 180°C in Gegenwart saurer Katalysatoren unter Entfernung des Reaktionswassers, wobei das Gewichtsverhältnis von A zu B 5:1 bis 1:3 beträgt.

EP 0 246 582 A2

# Polyether, erhältlich durch Umsetzung von alkylolierten Bis-(4-hydroxyphenyl)-methanen mit Polyalkylenoxiden und deren Verwendung als Erdölemulsionsspalter

Die Erfindung betrifft neue, als Erdölemulsionsspalter geeignete Polyether, erhältlich durch Vernetzung von Polyalkylenoxiden mit alkylolierten Bis-(4-hydroxyphenyl)-methanen und ihre Verwendung zur Schnellentwässerung von Rohölen.

Bekanntlich fällt nach einer Anfangsphase, in der praktisch reines Rohöl gefördert wird, der größte Teil des produzierten Rohöls als Wasser-in-Öl-Emulsionen an. Das Wasser muß aber vor dem Transport abgetrennt bzw. unter eine akzeptable Konzentration abgesenkt werden. Dies erfolgt durch Brechen der Emulsion, meist durch den Zusatz von sogenannten Erdölemulsionsspaltern, wobei eine Erwärmung des Rohöls die Auftrennung erleichtert und beschleunigt. Die Zusammensetzungen der Rohölemulsionen schwanken stark je nach Provenienz; zur Erreichung optimaler Demulgierergebnisse sind deshalb weltweit viele verschiene Erdölemulsionsspalter im Einsatz. Es besteht jedoch ein großes Interesse an verbesserten Demulgatoren, welche bei verschiedensten Rohölemulsionen schnellere Auftrennung in Wasser und Öl liefern sollen.

Als Demulgatoren bekannt sind Ethylenoxid/Propylenoxid-Blockpolymere, alkoxylierte Alkylphenolformaldehyd-Harze, alkoxylierte Polyamine, Polymere mit Polyalkylenoxid-Einheiten sowie Vernetzungsprodukte der obigen Verbindungen. In EP-A1 97 897 und DE-AS 24 45 873 werden Vernetzungsprodukte von Polyalkylenoxiden und stickstoffhaltigen Polyalkylenoxiden mit z.B. methylolierten Phenol und Verwendung der Vernetzungsprodukte als Erdölemulsionsspalter beschrieben.

Dazu wird Phenol mit Formaldehyd oder Acetaldehyd im Verhältnis 1:1 bis 1:3 (bevorzugt 1:1,8 bis 2,2) unter Basenkatalyse bei Temperaturen von 50 bis 80°C umgesetzt. Es bilden sich je nach Reaktandverhältnis Mono-, Di-oder Trimethylolphenole, welche in einer anschließenden säurekatalysierten Umsetzung mit Polyalkylenoxiden bzw. stickstoffhaltigen Polyalkylenoxiden unter Wasserabspaltung zu vernetzten Produkten reagieren. Die besten Wirksamkeiten werden bei Verwendung von Trimethylolphenol erreicht, hergestellt durch Reaktion von 3 Mol Formaldehyd und 1 Mol Phenol unter Alkalikatalyse. Teilweise treten bei den Reaktionen mit Trimethylolphenol jedoch Probleme durch Ausfällungen auf.

Es bestand daher die Aufgabe, verbesserte Erdölemulsionsspalter vorzuschlagen, die sowohl ausgezeichnete Demulgatoreigenschaften aufweisen als auch nicht die genannten Nachteile haben. Diese Aufgabe wurde erfindungsgemäß durch die Verwendung von noch höher methylolierten Verbindungen gelöst, durch die noch wesentlich bessere Wirkungseigenschaften und keine Ausfällungen im Laufe der Kondensation ermöglicht werden. Als höhermethylolierte Verbindungen erwiesen sich Umsetzungsprodukte von Bis-(4-hydroxyphenyl)-methan bzw. dessen Derivate, z.B. 2,2-Bis-(4-hydroxyphenyl)-propan, mit aliphatischen Aldehyden im Verhältnis 1:1 bis 1:4 als am besten geeignet.

Gegenstand der Erfindung sind somit Kondensationsprodukte, erhältlich durch Reaktion aus

A) einem Polyalkylenoxid aus Ethylenoxid und Propylenoxid mit insgesamt 5 bis 200 Alkylenoxid-Einheiten mit

B) einem Alkylolierungsprodukt von Bis-(4-hydroxyphenyl)-methanen der allgemeinen Formel II

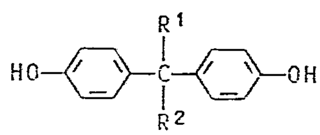

in der $R^1$ und $R^2$ gleich oder verschieden sein können und Wasserstoff, niedermolekulares Alkyl, Phenyl, Carboxy oder niedermolekulares Alkoxycarbonyl bedeuten, wobei vorzugsweise $R^1$ die Bedeutungen Ethyl, Phenyl, Carboxy und Methoxycarbonyl und insbesondere Wasserstoff und Methyl, $R^2$ die Bedeutungen Ethyl, Phenyl und insbesondere Wasserstoff und Methyl hat, durch Umsetzung mit niedermolekularen Aldehyden als Alkylolierungsmitteln, z.B. Acetaldehyd und Propionaldehyd und insbesondere Formaldehyd im Molverhältnis Bis-(4-hydroxyphenyl)-methane zu Aldehyd von 1:1 bis 1:4, bevorzugt 1:3 bis 1:4 in Gegenwart eines alkalischen Katalysators bei Temperaturen von 50 bis 80°C innerhalb von 1 bis 4 Stunden, wobei die Umsetzung der Komponente A mit der Komponente B im Gewichtsverhältnis 1:3 bis 5:1, bevorzugt 1:2 bis 2:1, in Gegenwart saurer Katalysatoren bei Temperaturen von 100 bis 180°C unter Entfernung des Reaktionswassers, gegebenenfalls unter Verwendung eines azeotropen Schleppmittels, wie Toluol oder Xylol, erfolgt.

Die Herstellung der Vorprodukte aus Bis-(4-hydroxyphenyl)-methanen, insbesondere 2,2-Bis-(4-hydroxyphenyl)-propan und Bis-(4-hydroxyphenyl)-methan, und den Aldehyden gelingt in Gegenwart alkalischer Katalysatoren, z.B. Natriumhydroxid, Kaliumhydroxid oder Na-und K-Alkoholaten, in wäßriger Lösung bei Temperaturen von 50 bis 80°C innerhalb von 1 bis 4 Stunden. Dabei sollte die obere Temperaturgrenze eingehalten werden, um weiterführende Kondensationen zu harzartigen Produkten zu vermeiden. Das molare Verhältnis zwischen den Bis-(4-hydroxyphenyl)-methanen und dem Aldehyd beträgt 1:1 bis 1:4, bevorzugt 1:3 bis 1:4. Die Menge an alkalischem Katalysator beträgt in der Regel 0,5 bis 15 Gew.%, vorzugsweise 2 bis 6 Gew.%, bezogen auf die Menge an eingesetzten Bis-(4-hydroxyphenyl)-methanen. Bei Verwendung von Formaldehyd wird dieser zweckmäßig in Form der 35 %igen wäßrigen Lösung zugegeben. Die Löslichkeit der Bis-(4-hydroxyphenyl)-methane reicht meist nicht aus, um eine klare wäßrige Lösung herzustellen; in diesen Fällen suspendiert man die Komponente in 50 bis 90 Gew.% Wasser, bezogen auf die Mischung, und dosiert nach Zugabe des Katalysators den Aldehyd bei 50 bis 60°C innerhalb von 1 bis 2 Stunden zu. Durch die Alkylolierung, insbesondere die Methylolierung werden die Bis-(4-hydroxyphenyl)-methan-Derivate wasserlöslich und man erhält nach einer Nachreaktionszeit von 2 bis 4 Stunden bei 60 bis 80°C eine homogene Lösung der Methylolverbindungen.

Die Polyalkylenoxide (A) sind statistische oder bevorzugt Blockpolymere ausgehend von Ethylenglykol oder bevorzugt von Propylenglykol als Initiator. Insbesondere kommen Polyalkylenglykole der Formel I

$$HO-\left[B-O\right]_x-\left[A-O\right]_y-\left[B-O\right]_x-H$$

in Betracht, in der A-O und B-O gleich oder verschieden sein können und jeweils die Reste von Ethylenoxid oder Propylenoxid bedeuten und x und y die Zahlen 0 bis 100 bedeuten mit der Maßgabe, daß die Summe von x+y 5 bis 200 bedeutet. Besonders bevorzugt sind Polyalkylenoxide der Formel I, in der x 1 bis 40, y 5 bis 60 und x+y 8 bis 100 bedeuten.

Die Synthese der Polyalkylenoxide gelingt nach bekannten Verfahren durch Addition von Ethylenoxid und/oder Propylenoxid an Ethylenglykol bzw. Propylenglykol in Gegenwart basischer Katalysatoren, vorzugsweise Natriumhydroxid oder Kaliumhydroxid bei Temperaturen von 100 bis 160°C im Autoklaven bei 6 bar. Die Menge an Katalysator beträgt im allgemeinen 0,25 bis 5 %, bevorzugt 0,5 bis 2 %, bezogen auf Ausgangsprodukt. Das Molver hältnis von Polyethylenoxid-Anteil zu Polypropylenoxid-Anteil schwankt zwischen 0:100 und 100:0, wobei bevorzugte Verhältnisse 1:30 bis 8:1 sind.

Nach Zugabe der Polyalkylenoxide zu der wäßrigen Lösung der alkylolierten Bis-(4-hydroxyphenyl)-methane wird nach Neutralisation mit geeigneten Säuren auf pH 6 bis 7, gegebenenfalls nach Verdünnung mit Wasser, die Veretherung bei Reaktionstemperaturen von 100 bis 180°C unter Entfernung des Reaktionswassers durchgeführt. Das Gewichtsverhältnis von Polyalkylenoxid zu alkylolierter Komponente beträgt 1:3 bis 5:1, bevorzugt 1:2 bis 2:1. Als Katalysatoren werden in der Regel Mineralsäuren oder organische Säuren verwendet, bevorzugt sind Dodecylbenzolsulfonsäure und p-Toluolsulfonsäure. Die vollständige Entfernung des Reaktionswassers erfolgt z.B. durch Vakuumdestillation oder azeotrope Destillation mit bekannten Schleppmitteln (z.B. Xylol, Toluol). Die erfindungsgemäßen Produkte sind in Mengen von 2 bis 100 g pro Tonne hochwirksame Demulgatoren für Rohölemulsionen.

Die Erfindung wird an nachfolgenden Beispielen erläutert. Teile bedeuten Gewichtsteile.

## Beispiele

### A) Polyalkylenoxide

In einem Autoklav legt man unter Stickstoffatmosphäre 76 g Propylenglykol und 0,8 g Kaliumhydroxid vor und setzt es bei 130 bis 140°C und 6 bar mit 928 g Propylenoxid um. Anschließend gibt man in einer zweiten Stufe bei 120 bis 130°C noch 110 g Ethylenoxid zu und hält gegen Ende der Reaktion die Temperatur zur vollständigen Umsetzung noch 1 h bei 140°C. Das Molekulargewicht berechnet sich aus der gemessenen OH-Zahl auf 1100. Dies ist Beispiel A1 in der nachfolgenden Tabelle. In gleicher Weise werden die Produkte der Beispiele A2 bis A13 und Verwendung der in der Tabelle angegebenen Mengen der Ausgangsstoffe erhalten.

Tabelle 1

Polyalkylenoxide

| Bsp. | Alkohol | Teile Alkohol | Katalysator | Teile Katalysator | Teile Propylenoxid | Teile Ethylenoxid | Molekulargewicht ber. aus OH-Zahl |
|---|---|---|---|---|---|---|---|
| A 1 | Propylenglykol | 76 | KOH | 0,8 | 928 | 110 | 1100 |
| A 2 | Propylenglykol | 76 | KOH | 0,8 | 1131 | 510 | 1700 |
| A 3 | Propylenglykol | 76 | KOH | 0,8 | 1682 | 211 | 1800 |
| A 4 | Propylenglykol | 76 | KOH | 0,8 | 1682 | 458 | 2200 |
| A 5 | Propylenglykol | 76 | KOH | 0,8 | 1682 | 1531 | 3000 |
| A 6 | Propylenglykol | 76 | KOH | 0,8 | 1682 | 6512 | 8500 |
| A 7 | Propylenglykol | 76 | KOH | 0,8 | 2282 | 264 | 2600 |
| A 8 | Propylenglykol | 76 | KOH | 0,8 | 2691 | 880 | 3650 |
| A 9 | Propylenglykol | 76 | KOH | 0,8 | 2691 | 1848 | 4600 |
| A10 | Propylenglykol | 76 | KOH | 0,8 | 3190 | 299 | 3550 |
| A11 | Propylenglykol | 76 | KOH | 0,8 | 3190 | 3256 | 6500 |
| A12 | Propylenglykol | 76 | KOH | 0,8 | 1924 | - | 2000 |
| A13 | Ethylenglykol | 60 | KOH | 0,6 | - | 1440 | 1500 |

B) Umsetzung von Bis-(4-hydroxyphenyl)-methanen mit Aldehyden

Zu einer Suspension von 456,6 g 2,2-Bis-(4-hydroxyphenyl)-propan (Komponente 1) in 500 ml Wasser suspendiert tropft man bei 50°C eine Lösung von 10 g Natriumhydroxid in 10 g Wasser zu. Anschließend läßt man bei 60°C 800 g einer 30 %igen wäßrigen Formaldehydlösung zutropfen und läßt 2,5 h bei 60°C nachreagieren. Dabei bildet sich eine klare Lösung des Methylolproduktes. Dies ist Gegenstand des Beispiels B1 in der nachfolgenden Tabelle. Die Beispiele B2 bis B4 wurden in gleicher Weise erhalten.

Tabelle 2

Umsetzung von Bis-(4-hydroxyphenyl)-methanen mit Aldehyden

| Bsp. | Komponente 1 | Teile Komponente 1 | Katalysator | Teile Katalysator | Aldehyd | Teile Aldehyd | Wirkstoffgehalt |
|---|---|---|---|---|---|---|---|
| B 1 | 2,2-Bis-(4-hydroxyphenyl)-propan | 457 | NaOH | 10 | Formaldehyd | 240 | 40 % |
| B 2 | 2,2-Bis-(4-hydroxyphenyl)-propan | 457 | NaOH | 10 | Formaldehyd | 180 | 40 % |
| B 3 | Bis-(4-hydroxyphenyl)-methan | 400 | NaOH | 10 | Formaldehyd | 240 | 40 % |
| B 4 | Bis-(4-hydroxyphenyl)-methan | 400 | NaOH | 10 | Formaldehyd | 180 | 40 % |

C) Veretherung der Polyalkylenoxide aus A) mit den Methylolverbindungen aus B

88 g der Lösung aus Beispiel B1 (Komponente 2) werden bei 50°C mit 390 g des Polyalkylenoxids aus Beispiel B3 (Komponente 1) versetzt und mit 50 ml Wasser verdünnt. Durch Zugabe von Dodecylbenzolsulfonsäure wird der pH der Lösung auf 6,3 eingestellt. Die Lösung wird auf 80°C erwärmt und vorsichtig der Druck durch eine Wasserstrahlpumpe verringert. Die Hauptmenge an Wasser wird zwischen 80 und 130°C abdestilliert. Gegen Ende der Reaktion erwärmt man noch 5 h auf 150°C und entfernt restliches Reaktionswasser im Vakuum. Man erhält eine bräunlich gefärbte klare hochviskose Substanz. Dies ist das Produkt des Beispiels C1 in der Tabelle 3. Die Produkte der Beispiele C2 bis C15 werden analog dieser Verfahrensweise hergestellt, wobei bei manchen Ansätzen eine größere Menge an Wasser zuzusetzen ist, um den pH-Wert auf 6,3 bis 6,8 einzustellen. Bei Anlegen des Wasserstrahlvakuums kommt es bei manchen Beispielen zum Aufschäumen des Ansatzes. Durch Zugabe geringer Mengen eines Schaumdämpfers lassen sich aber auch bei diesen Ansätzen die Veretherungen durchführen. Bei den Beispielen C 9, C 10, C 12 wurde gegen Ende der Umsetzung zur Verdünnung Xylol zugegeben und das restliche Wasser durch azeotrope Destillation ausgekreist.

Tabelle 3

Veretherung der Produkte aus A mit den Produkten aus B

| Bsp. | Komponente 1 | Komponente 2 | Teile 1 | Teile 2 | Säure |
|---|---|---|---|---|---|
| C 1 | A 3 | B 1 | 390 | 88 | Dodecylbenzolsulfonsäure |
| C 2 | A 5 | B 1 | 290 | 44 | Dodecylbenzolsulfonsäure |
| C 3 | A 11 | B 1 | 163 | 11 | Dodecylbenzolsulfonsäure |
| C 4 | A 4 | B 1 | 220 | 44 | Dodecylbenzolsulfonsäure |
| C 5 | A 4 | B 2 | 220 | 119 | Dodecylbenzolsulfonsäure |
| C 6 | A 2 | B 2 | 170 | 80 | Dodecylbenzolsulfonsäure |
| C 7 | A 5 | B 2 | 150 | 40 | Dodecylbenzolsulfonsäure |
| C 8 | A 9 | B 2 | 460 | 80 | Dodecylbenzolsulfonsäure |
| C 9 | A 4 | B 1 | 220 | 88 | Dodecylbenzolsulfonsäure |
| C 10 | A 5 | B 1 | 300 | 88 | Dodecylbenzolsulfonsäure |
| C 11 | A 8 | B 3 | 365 | 40 | Dodecylbenzolsulfonsäure |
| C 12 | A 1 | B 3 | 110 | 80 | Dodecylbenzolsulfonsäure |
| C 13 | A 7 | B 3 | 260 | 40 | Dodecylbenzolsulfonsäure |
| C 14 | A 6 | B 4 | 850 | 73 | Dodecylbenzolsulfonsäure |
| C 15 | A 10 | B 4 | 355 | 73 | Dodecylbenzolsulfonsäure |
| C 16 | A 7 | B 2 | 260 | 80 | Dodecylbenzolsulfonsäure |
| C 17 | A 7 | B 1 | 260 | 88 | Dodecylbenzolsulfonsäure |
| C 18 | A 7 | B 1 | 390 | 88 | Dodecylbenzolsulfonsäure |

Vergleichsbeispiele 1 und 2

Man verfuhr nach den Angaben des Beispiels A unter Wahl der Verhältnisse gemäß Beispiel A7. Als vernetzende Komponente wurde wie in EP-A 97897 das dort beschrieben Dimethylolphenol (Vergleichsbeispiel 1) bzw. Trimethylolphenol (Vergleichsbeispiel 2) verwendet und nach den Angaben des Beispiels C umgesetzt, wobei die Molverhältnisse zwischen Komponente A und B denen der Beispiele C16 bzw. C18 entsprachen.

Ausführung der Vergleichsversuche

Die Spaltversuche wurden in einer Rühlermoor-Rohölemulsion aus Norddeutschland bei 50°C durchgeführt. Der Wassergehalt der Emulsion betrug ca. 50 %.

Zu 100 g der Rohölemulsion, die 50 % Wasser enthielt, wurden bei 50°C die angeführten ppm Mengen an Erdölemulsionsspalter zugegeben und intensiv durchgerührt. Danach wurde das Gemisch bei 50°C sich selbst überlassen und die Menge des klar abgeschiedenen Wassers nach 10, 20, 30, 60, 120 und 240 Minuten gemessen.

Dosierung: 10 ppm

Abgeschiedene Wassermenge nach Min:

| | 10 | 20 | 30 | 60 | 120 | 240 |
|---|---|---|---|---|---|---|
| C 16 | 1 | 4 | 5 | 49 | 50 | 50 |
| C 17 | 1 | 2 | 5 | 50 | 51 | 51 |
| C 18 | 0 | 5 | 14 | 50 | 50 | 10 |
| V 1 | 0 | 0 | 0 | 0 | 3 | 20 |
| V 2 | 0 | 0 | 0 | 0 | 1 | 4 |

Wie aus der Prüfung ersichtlich ist, zeigen die Produkte aus Beispiel C16-C18 bereits nach 60 Minuten eine vollständige Demulgierung, während die beiden Vergleichsproben keine Trennung bewirken.

## Ansprüche

1. Als Erdölemulsionsspalter geeignete Polyether, erhältlich durch Umsetzung von

A) Polyalkylenoxiden aus Ethylenoxid und Propylenoxid mit insgesamt 5 bis 200 Alkylenoxid-Einheiten mit

B) Alkylolierungsprodukten mit niedermolekularen Aldehyden von Bis-(4-hydroxyphenyl)-methanen der allgemeinen Formel II

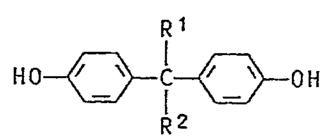

in der $R^1$ und $R^2$ gleich oder verschieden sein können und Wasserstoff, niedermolekulares Alkyl, Phenyl, Carboxy oder niedermolekulares Alkoxycarbonyl bedeuten, wobei das molare Umsetzungsverhältnis der Verbindungen der Formel II zu den alkylolierenden Aldehyden 1:1 bis 1:4 beträgt,

bei Temperaturen von 100 bis 180°C in Gegenwart saurer Katalysatoren unter Entfernung des Reaktionswassers, wobei das Gewichtsverhältnis von A zu B 5:1 bis 1:3 beträgt.

2. Polyether gemäß Anspruch 1, erhältlich durch Umsetzung von

A) Polyalkylenoxiden der Formel I

$$HO-[B-O]_x-[A-O]_y-[B-O]_x-H$$

in der A-O und B-O gleich oder verschieden sein können und jeweils die Reste von Ethylenoxid oder Propylenoxid bedeuten und x und y die Zahlen 0 bis 100 bedeuten mit der Maßgabe, daß die Summe von x+y 5 bis 200 bedeutet.

3. Polyether gemäß Anspruch 2, erhältlich durch Umsetzung von

A) Polyalkylenoxiden der Formel I, in der x die Zahlen 1 bis 40, y die Zahlen 5 bis 60 und x+y die Zahlen 8 bis 100 bedeuten.

4. Polyether gemäß Anspruch 1, dadurch gekennzeichnet, daß man als Komponente B Methylolierungsprodukte von Bis-(4-hydroxyphenyl)-methan oder von 2,2-Bis-(4-hydroxyphenyl)-propan verwendet, wobei das Molverhältnis der Bis-(4-hydroxyphenyl)-methane zum Methylolierungsmittel Formaldehyd 1:3 bis 1:4 beträgt.

5. Verfahren zur Herstellung von Polyethern, dadurch gekennzeichnet, daß man
A) Polyalkylenoxide aus Ethylenoxid und Propylenoxid mit insgesamt 5 bis 200 Alkylenoxid-Einheiten mit
B) Alkylolierungsprodukten mit niedermolekularen Aldehyden von Bis-(4-hydroxyphenyl)-methanen der allgemeinen Formel II

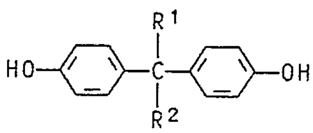

in der $R^1$ und $R^2$ gleich oder verschieden sein können und Wasserstoff, niedermolekulares Alkyl, Phenyl, Carboxy oder niedermolekulares Alkoxycarbonyl bedeuten, wobei das molare Umsetzungsverhältnis der Verbindungen der Formel II zu den alkylolierenden Aldehyden 1:1 bis 1:4 beträgt,
bei Temperaturen von 100 bis 180°C in Gegenwart saurer Katalysatoren unter Entfernung des Reaktionswassers umsetzt, wobei das Gewichtsverhältnis von A zu B 5:1 bis 1:3 beträgt.

6. Verwendung von Polyethern gemäß Anspruch 1 als Demulgatoren für Erdöl/Wasser-Emulsionen.